# EUROPEAN PATENT APPLICATION

(11) **EP 1 837 074 A1**
(43) Date of publication of application: **26.09.2007**
(21) Application number: 06005618.1
(22) Date of filing: 20.03.2006
(51) Int. Cl.: B01J 13/20, B01J 13/10

(54) **Process for the production of microcapsules with controlled hardness**

(71) Applicant: Cognis IP Management GmbH, 40589 Düsseldorf (DE)
(72) Inventor: Asensio, Juan-Antonio Dr., 08820 El Prat de Llobregat (Barcelona) (ES); Viladot Petit, Josep-Lluis Dr., 08018 Barcelona (ES)
(74) Representative: Fabry, Bernd

(57) **Abstract**

Suggested is a process for the production of microcapsules with controlled hardness by encapsulation of an active into a shell and subsequent treatment of the capsule thus obtained with an aqueous solution of a bivalent metal salt, which is characterised in that the microcapsules thus obtained are brought into contact one or more times with an aqueous solution of a sequestering agent in order to release an amount of bivalent metal ions out of the shell of said capsule sufficient to achieve the desired hardness.

## Description

### Object of the invention

The present invention relates to a new process for the preparation of microcapsules with controlled hardness and flexibility by adjusting the concentration of bivalent metal ions in the shell of the capsules.

### State of the art

"Microcapsules" are understood to be spherical aggregates with a diameter of about 0.1 to 5 mm which contain at least one solid or liquid core surrounded by at least one continuous membrane. More precisely, they are finely dispersed liquid or solid phases coated with film-forming polymers, in the production of which the polymers are deposited onto the material to be encapsulated after emulsification and coazervation or interfacial polymerization. In another process, liquid active principles are absorbed in a matrix ("microsponge") and, as microparticles, may additionally be coated with film-forming polymers. The microscopically small capr sules, also known as nanocapsules, can be dried in the same way as powders. Besides single-core microcapsules, there are also multiple-core aggregates, also known as microspheres, which contain two or more cores distributed in the continuous membrane material. In addition, single-core or multiple-core microcapsules may be surrounded by an additional second, third, etc. membrane. The membrane may consist of natural, semi-synthetic or synthetic materials. Natural membrane materials are, for example, gum arabic, agar agar, agarose, maltodextrins, alginic acid and salts thereof, for example sodium or calcium alginate, fats and fatty acids, cetyl alcohol, collagen, chitosan, lecithins, gelatin, albumin, shellac, polysaccharides, such as starch or dextran, polypeptides, protein hydrolyzates, sucrose and waxes. Semi-synthetic membrane materials are, inter alia, chemically modified celluloses, more particularly cellulose esters and ethers, for example cellulose acetate, ethyl cellulose, hydroxypropyl cellulose, hydroxypropyl methyl cellulose and carboxymethyl cellulose, and starch derivatives, more particularly starch ethers and esters. Synthetic membrane materials are, for example, polymers, such as polyacrylates, polyamides, polyvinyl alcohol or polyvinyl pyrrolidone.

Examples of known microcapsules are the following commercial products (the membrane material is shown in brackets) Hallcrest Microcapsules (gelatin, gum arabic), Coletica Thalaspheres (maritime collagen), Lipotec Millicapseln (alginic acid, agar agar), Induchem Unispheres (lactose, microcrystalline cellulose, hydroxypropylmethyl cellulose), Unicetin C30 (lactose, microcrystalline cellulose, hydroxypropylmethyl cellulose), Kobo Glycospheres (modified starch, fatty acid esters, phospholipids), Softspheres (modified agar agar) and Kuhs Probiol Nanospheres (phospholipids).

The active principles are released from the microcapsules by mechanical, thermal, chemical or enzymatic destruction of the membrane, normally during the use of the preparations containing the microcapsules. From the state of the art also a huge number of different processes for the encapsulation of active principles are known: WO 99/043426**;** WO 01/001928**;** WO 01/001929**;** WO 01/066240**;** WO 01/066241**;** WO 01/098578**;** WO 02/0178859**;** WO 02/0178868**;** WO 02/076607**;** WO 02/076606**;** WO 02/077359**;** WO 02/077360**;** WO 03/022419**;** WO 03/093571**;** WO 03/092664**;** WO 03/092880**;** WO 04/091555**;** WO 04/106621**;** EP 1064911 B1**;** EP 1064912 B1**;** EP 1077060 B1**;** EP 1101527 B1**;** EP 1223243 B1**;** EP 1243318 B1**;** EP 1243320 B1**;** EP 1243323 B1**;** EP 1243324 B1**;** EP 1254983 B1**;** EP 1121542 B1 all filed on behalf of Henkel KGaA, Primacare S.A. or Cognis Iberia, S.L. and herewith incorporated by reference.

Despite the fact that the state of the art offers a huge range of possibilities for the encapsulation of actives, methods according to which a shell is obtained by coazervation, precipitation or poly-condensation of anionic and cationic polymers have been quite suitable for the formation of stable capsules. For a number of applications, however, such capsules show an insufficient stability which makes it necessary to increase the stability and hardness of the shell. A useful and easy procedure - especially in case the capsules were obtained from a coazervation of anionic and cationic polymers - is to bring the capsules into an aqueous bath of an alkaline earth metal salt, preferably an aqueous solution of calcium chloride. The bivalent metal ions are incorporated into the shell and crosslink the polymers. Unfortunately it is not possible to control the process of hardening the capsules. Therefore, capsules are often obtained which are too hard for a number of applications. This means that instead of breaking too early, such capsules do not release the actives at all.

Therefore, the problem underlying the present invention has been to modify the known process of hardening capsules by treatment with bivalent metal salts in a way that it is possible to control the concentration of metal ions in the shell in order to design capsules with a defined hardness and flexibility necessary for a particular application.

### Description of the invention

The present invention claims a process for the production of microcapsules with controlled hardness by encapsulation of an active into a shell and subsequent treatment of the capsule thus obtained with an aqueous solution of a bivalent metal salt, which is characterised in that the microcapsules thus obtained are brought into contact one or more times with an aqueous solution of a sequestering agent in order to release an amount of bivalent metal ions out of the shell of said capsule sufficient to achieve the desired hardness.

A second embodiment of the present invention is directed to the microcapsules obtainable according to the process as described above.

Surprisingly it has been found that the post-treatment of capsules hardened with bivalent metal salts with sequestering agents such as EDTA, releases metal ions out of the shell of the capsules, thereby reducing their hardness and improving their flexibility. By varying the number of treatments, time, and concentration of the sequestering agents it is possible to adjust the concentration of the metal ions in the shell according to the needs of the customer.

### Manufacture of the microcapsules

The manufacture of the microcapsules is a non-critical factor. The present invention is applicable to all kinds of capsules which are subjected to a hardening process in which bivalent or even multivalent metal ions are incorporated into the shell. Therefore, the invention is also suitable for microcapsules comprising actives embedded into a (gel) matrix. Also the nature of the active is not critical. Preferably, the microcapsules - showing an average diameter of 0.0001 to 5, more particularly 0.01 to 0.1 mm - are obtained from the coazervation of anionic and cationic polymers.

Typical examples for suitable anionic polymers are salts of alginic acid. Alginic acid is a mixture of carboxyl-containing polysaccharides with the following idealized monomer unit:

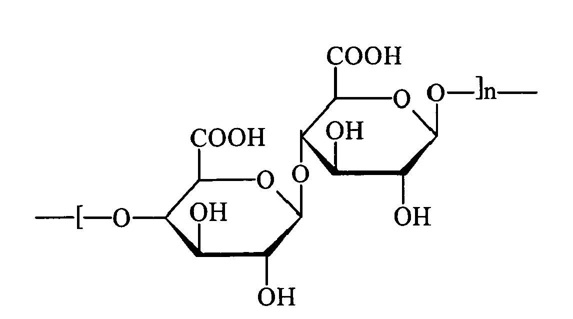

The average molecular weight of alginic acid or the alginates is in the range from 150,000 to 250,000. Salts of alginic acid and complete and partial neutralization products thereof are understood, in particular, to be the alkali metal salts, preferably sodium alginate ("algin") and the ammonium and alkaline earth metal salts. Mixed alginates, such as sodium/magnesium or **sodium/calcium** alginates, are particularly preferred. Alternatively, carboxymethyl celluloses or anionic chitosan derivatives, such as carboxylation and, particularly, succinylation products are also suitable for this purpose.

Suitable cationic polymers are, for example, cationic cellulose derivatives such as quaternized hydroxyethyl cellulose obtainable from Amerchol under the name of Polymer JR 400®, cationic starch, copolymers of diallyl ammonium salts and acrylamides, quaternized vinyl pyrrolidone/vinyl imidazole polymers such as Luviquat® (BASF), condensation products of polyglycols and amines, quaternized collagen polypeptides such as Lauryldimonium Hydroxypropyl Hydrolyzed Collagen (Lamequat® L, Grünau), quaternized wheat polypeptides, polyethyleneimine, cationic silicone polymers such as amodimethicone, copolymers of adipic acid and dimethylaminohydroxypropyl diethylenetriamine (Cartaretine^{®}, Sandoz), copolymers of acrylic acid with dimethyl diallyl ammonium chloride (Merquat^{®} 550, Chemviron), polyaminopolyamides and crosslinked water-soluble polymers thereof, cationic chitin derivatives such as quaternized chitosan, optionally in microcrystalline distribution, condensation products of dihaloalkyls, for example dibromobutane, with bis-dialkylamines, for example bis-dimethylamino-1,3-propane, cationic guar gum such as Jaguar^{®}CBS, Jaguar^{®}C-17, Jaguar^{®}C-16 of Celanese, quaternized ammonium salt polymers such as Mirapol^{®} A-15, Mirapol^{®} AD-1, Mirapol^{®} AZ-1 of Miranol. Preferred cationic polymers are chitosan and chitosan derivatives.

### Hardening of the microcapsules

The hardening of the microcapsules usually takes place by introducing them into an aqueous bath of an alkaline earth metal salt, which is usually a calcium salt, and preferably a solution of calcium chloride. The microcapsules are subjected to this treatment under slow agitation for a period of 1 to 12 hours, usually at a temperature of 20 to 25 °C. Subsequently they are removed from the bath by simple filtration, and washed with water.

### Post-treatment of the microcapsules

After hardening, the wet capsules are brought into contact with a sequestering agent, which is to reduce the concentration of metal ions in the shell so that the desired hardness and flexibility are achieved. Typical examples for useful sequestering agents are polymeric carboxylic acids, such as citric acid, adipic acid, succinic acid, glutaric acid, tartaric acid, sugar acids, aminocarboxylic acids, nitrilotriacetic acid (NTA) and preferably ethylentriamin tetracetic acid (EDTA) and their mixtures.

Post-treatment is conducted for a time sufficient to release about 10 to about 90 % b.w. of the bivalent metal ions out of the shell of the capsules. The easiest way to conduct the process according to the present invention is to bring the capsules into an aqueous bath comprising the sequestering agent in a concentration of 0.1 to 10 % b.w. and leave them for a period of 1 to 24, and preferably 5 to 12 hours, at room temperature under mild agitation. As the concentration of the remaining bivalent ions in the shell depends on a couple of different parameters, like thickness of the shell, concentration of the sequestering agents in the bath, contact time etc. no general rule is given on how to obtain a specific degree of metal ions in the shell or how to achieve a particular hardness. Adjustment of the parameters as needed, however, belongs to routine optimisation and can be found out be a skilled person in the course of a simple equilibration of the concrete system without any inventive activity.

The process is further illustrated in the following examples.

### Examples

### Example 1

Microcapsules having an average diameter of 0.01 to 5 mm were obtained from the coazervation of sodium alginate and chitosan. The capsules were subjected to an aqueous bath of a 5 % solution of calcium chloride at 20 °C for 5 hours, filtered off, washed with water and then subjected into a second aqueous bath of 2 % EDTA. Post-treatment took place at 20 °C over a period of 24 hours. From time to time samples were taken, and the amount of calcium ions in the shell was compared to the amount prior to the treatment with the sequestering agent detected. The results are given in Table 1:

**Table 1**

| **Treatment of hardened microcapsules with EDTA** | |
|---|---|
| Time of post-treatment [h] | Remaining Ca²⁺ level in the capsules [%-rel.] |
| 0 | 100 |
| 1 | 89 |
| 5 | 42 |
| 12 | 36 |
| 24 | 28 |

### Example 2

Example 1 was repeated, however using different sequestering agents at different concentrations. Each treatment was conducted over a period of 12 hours. The results are presented in Table 2:

**Table 2**

| **Treatment of hardened microcapsules with EDTA** | | |
|---|---|---|
| Sequestering agent | Concentration [% b.w.] | Remaining Ca²⁺ level in the capsules [%-rel.] |
| EDTA | 1 | 44 |
| EDTA | 2 | 36 |
| EDTA | 5 | 29 |
| NTA | 1 | 48 |
| NTA | 2 | 40 |
| NTA | 5 | 33 |
| Citric acid | 1 | 86 |
| Citric acid | 2 | 69 |
| Citric acid | 5 | 61 |

## Claims

1. Process for the production of microcapsules with controlled hardness by encapsulation of an active into a shell and subsequent treatment of the capsule thus obtained with an aqueous solution of a bivalent metal salt, **characterised in that** the microcapsules thus obtained are brought into contact one or more times with an aqueous solution of a sequestering agent in order to release an amount of bivalent metal ions out of the shell of said capsule sufficient to achieve the desired hardness.

2. Process according to claim 1, **characterised in that** said microcapsules are obtained from the coazervation of anionic and cationic polymers.

3. Process according to claim 2, **characterised in that** said microcapsules are obtained from anionic polymers selected from the group consisting of alginic acids and their salts, carboxymethyl celluloses and anionic chitosan derivatives.

4. Process according to claim 2 and/or 3, **characterised in that** said microcapsules are obtained from cationic polymers selected from the group consisting of chitosan and chitosan derivatives.

5. Process according to any of claims 1 to 3, **characterised in that** said microcapsules are treated with aqueous solutions of calcium salts.

6. Process according to any of claims 1 to 4, **characterised in that** said microcapsules are treated with sequestering agents selected from the group consisting of citric acid, adipic acid, succinic acid, glutaric acid, tartaric acid, sugar acids, aminocarboxylic acids, nitrilotriacetic acid (NTA) and ethylentriamin tetracetic acid (EDTA) and their mixtures.

7. Process according to any of claims 1 to 5, **characterised in that** said microcapsules are treated with said sequestering agents for a time sufficient to release from 10 to about 90 % b.w. of the bivalent metal ions out of the shell of the capsules.

8. Process according to any of claims 1 to 6, **characterised in that** said microcapsules are treated with said sequestering agents over a period of 1 to 24 hours.

9. Process according to any of claims 1 to 8, **characterised in that** said microcapsules are brought into an aqueous bath comprising 0.1 to 10 % b.w. of said sequestering agents.

10. Microcapsules obtainable according to any of claims 1 to 9.
